# EUROPEAN PATENT APPLICATION

(11) **EP 3 300 393 A1**
(43) Date of publication of application: **28.03.2018**
(21) Application number: 15895452.9
(22) Date of filing: 20.11.2015
(51) Int. Cl.: H04W 4/00

(54) **MOBILE TERMINAL AND COMMUNICATION METHOD THEREFOR**

(30) Priority: 17.06.2015 CN 201510338642
(71) Applicant: Phicomm (Shanghai) Co., Ltd., Shanghai 201616 (CN)
(72) Inventor: LING, Zhonghai, Shanghai 200050 (CN)
(74) Representative: Sun, Yiming
(86) International application number: PCT/CN2015/095217
(87) International publication number: WO 2016/201885

(57) **Abstract**

The present disclosure provides a mobile terminal and a communication method therefor. The method comprises: using a display screen of a mobile terminal as a signal transmitting source, blackness and whiteness of the screen corresponding to '0' and '1' in a binary system respectively; and using a light sensor in the mobile terminal as a signal receiving source, and detecting the blackness and whiteness changes of a display screen of corresponding mobile terminal, so as to convert the pattern into internally identifiable '0' and '1' data. The present method uses a range sensor between mobile terminals as a reference for identifying whether two mobile terminals fit each other, guarantees automatic transmitting and receiving of data, and avoid misinterpret caused by various types of flashing light, so as to effectively deploy convenient and quick point-to-point communication.

## Description

### TECHNICAL FIELD

The present disclosure relates to the field of communications and, in particular, to mobile terminals and a communication method therefor for realizing short-range optical communications.

### BACKGROUND

With the development of smartphones, it becomes more and more important for data transmission and information sharing. More and more technical elites are researching the communication technology regarding mobile-to-mobile or point-to-point communications. At present, several solutions for mobile-to-mobile communication are shown as follows:
Solution 1: Two mobiles are connected via manually Bluetooth pairing. When one mobile requests to send data such as a picture to the other mobile, perform the picture data transmission after the other mobile accepts the request. However, in this way, the Bluetooth function of both mobiles are required to activate manually. It is required to search and confirm the other mobile's name after triggering the sending via Bluetooth by one mobile, the other mobile only starts receiving the data when accepting the prompt. If there is a similar mobile nearby with Bluetooth activated, it is necessary to modify the Bluetooth name manually, which make it inconvenient; furthermore, it will affect other Bluetooth applications. If the user is playing the music via Bluetooth headset, it will be interrupted by pairing with the other mobile to perform data transmission, and restart to play the music when the data transmission is completed. It is not worth to stop playing music in order to share the playing music via Bluetooth.
Solution 2: The data transmission is performed via WiFi on the mobiles, which is similar to the transmission via Bluetooth. Since WiFi technology is not designed for point-to-point connection, so the third party is involved to perform the data transmission. The shortcomings are that: it is not convenient enough, because it requires one mobile phone to be served as a host mobile (e.g., manually setting hotspot) and the other mobile to be served as a slave mobile (e.g., manually connecting hotspot) and also requires the receiver's confirmation to allow the data transmission; it will also affect other WIFI applications, since such WIFI-based transmission cannot coexist with other WIFI applications, WIFI Internet access, for example, has to be interrupted, and resumes the internet access via WiFi only after the data transmission between the two mobiles is completed.
Solution 3: based on two mobiles both equipped with NFC function, data transmission is performed by automatic back-to-back pairing. Although this solution is greatly improved in the wireless transmission coexistence, there are still many shortcomings. Firstly, from a point of view of convenience, it still can be improved. Although NFC allows data transmission simply via back-to-back pairing between the mobile phones, in considerations of data security, privacy and etc., manually operation is still required for data transmission, for example, manual settings for automatic receiving of the NFC data or manual settings for NFC activation. Otherwise, a mobile put in a pocket with its back (an NFC antenna of the mobile phone is generally located at the back thereof) facing the outside (this is a natural way for most people) will cause possible data leaks or junk message reception. Moreover, this solution requires two mobiles equipped with NFC function, which leads to the application limitation. The mobiles without NFC function cannot complete such information sharing. In addition, NFC function leads to an increase in mobile cost and its extra NFC antennas cause the overall mobile thickness increase. These two facts conflict with the current slim, low-price trend of mobile.
Solution 4: based on two mobiles equipped with hotknot function, data transmission is performed via face-to-face automatic pairing. Hotknot function performs data transmission via fitting the mobiles face-to-face and capacitive touch panel(CTP) induction. The greatest limitation to this solution is that: only the specific mobile CPU platforms equipped with specific capacitive touch ICs and specific capacitive touch screens can perform the hotknot function, and only both mobiles are both equipped with this function, can perform the data transmission, which limits too much.

Therefore, it is necessary to propose mobile terminals and a communication method therefor that overcome the various defects of the prior art, so as to effectively realize mobile-to-mobile or point-to-point communications.

### SUMMARY

Embodiments of the present disclosure provide mobile terminals and a communication method therefor, so as to effectively deploy mobile-to-mobile or point-to-point communications.

In order to achieve the above and other related objects, the present disclosure provides a mobile terminal communication method, used in a first mobile terminal and a second mobile terminal equipped with light sensors, range sensors and screens, including the steps: 1) fitting a light sensor and a range sensor of a first mobile terminal to a screen of a second mobile terminal, a light sensor and a range sensor of a second mobile terminal to the screen of the first mobile terminal; 2) providing, by the first mobile terminal, an interactive button when an interaction requirement is selected, and triggering the interactive button to generate an interaction request; 3) activating, by the first mobile terminal, the range sensor of the first mobile terminal to cyclically detect the distance fitting between the first mobile terminal and the second mobile terminal when receiving the interaction request, and identifying whether the distance is within an allowable range, if so, proceeding to the next step; if not, terminating the communication process if a timeout occurs; 4) cyclically sending a handshake signal by the first mobile terminal; 5) activating, by the second mobile terminal, the range sensor of the second mobile terminal to cyclically detect the distance between the second mobile terminal and the first mobile terminal when receiving the handshake signal, and identifying whether the distance is within the allowable range, if so, proceeding to the next step, and if not, returning to a standby state; 6) sending a handshake feedback signal by the second mobile terminal; and 7) when the first mobile terminal receives the handshake feedback signal, establishing an interactive connection between the first mobile terminal and the second mobile terminal.

In one embodiment of the mobile terminal communication method of the present disclosure, the interaction requirement may be, for example, sending a to-be-transmitted data. Then, step 7) further includes: 7-1) sending, by the first mobile terminal, a to-be-transmitted data in a manner of blackness and whiteness flashing pattern of the screen, when the interactive connection is established between the first mobile terminal and the second mobile terminal; 7-2) activating the light sensor of the second mobile terminal to detect the blackness and whiteness flashing pattern on the screen of the first mobile terminal , and converting the pattern into recognizable binary signals which form data to be transmitted by the first mobile terminal; and 7-3) when the second mobile terminal completely receives the to-be-transmitted data, sending a message of successfully receiving the data to the first mobile terminal, and when the first mobile terminal receives the message of successfully receiving the data, providing a prompt message of successfully sending/receiving.

In another embodiment of the mobile terminal communication method of the present disclosure, the interaction requirement may be, for example, bidirectional data transmission. Specifically, the bidirectional data transmission may be, for example, contacts synchronization, BT/WIFI pairing, and encryption key/authority transfer contacts synchronization. Then, step 7) further comprises: 7-1)' respectively sending, by the first mobile terminal and the second mobile terminal, to-be-transmitted data in a manner of blackness and whiteness flashing pattern of the screen, when the interactive connection is established between the first mobile terminal and the second mobile terminal; and 7-2)' activating the light sensor of the first mobile terminal to detect the blackness and whiteness flashing pattern on the screen of the second mobile terminal , and converting the pattern into recognizable binary signals which forms data to be transmitted by the second mobile terminal, and meanwhile activating the light sensor of the second mobile terminal to detect the blackness and whiteness flashing pattern on the screen of the first mobile terminal , and converting the pattern into recognizable binary signals which forms data to be transmitted by the first mobile terminal.

In addition, the process of detecting the blackness and whiteness flashing pattern on the screen by the light sensor may further include: when the screen is in black, the binary signal received by the light sensor is 0, and when the screen is in white, the binary signal received by the light sensor is 1. The blackness and whiteness flashing pattern on the screen is performed by the high speed flashing of the backlight on the screen. Step 3) further includes: if the distance is not within the allowable range, further determining whether a timeout occurs, if not, performing the step of determining whether the distance is within the allowable range, if so, providing a prompt message of timeout and terminating the communication process.

Further, the present disclosure also provides a first mobile terminal applied with the mobile terminal communication method as defined above, including a light sensor, a range sensor and a screen, wherein the first mobile terminal further includes: a triggering module, configured to provide an interactive button when an interaction requirement is selected and trigger the interaction button to generate an interaction request; a first processing module, configured to, when receiving the interaction request generated by the triggering module, activate the range sensor to cyclically detect the distance fitting between the second mobile terminal and the range sensor, identify whether the distance is within the allowable range, if so, cyclically send a handshake signal and wait for a handshake feedback from the second mobile terminal, and when receiving the handshake feedback signal from the second mobile terminal, establish an interactive connection with the second mobile terminal; and a first Tx/Rx module, configured to, when the interactive connection is established with the second mobile terminal, according to the selected interaction requirement, send data in the manner of blackness and whiteness flashing pattern of the screen, or activate the light sensor to detect the blackness and whiteness flashing pattern on the screen of the second mobile terminal and convert the pattern into recognizable binary signals which forms data to be transmitted by the second mobile terminal. Wherein, the interaction requirement may be, for example, sending a to-be-transmitted data, bidirectional data transmission or the like.

Furthermore, the present disclosure also provides a second mobile terminal applied with the mobile terminal communication method as defined in claim 1, including a light sensor, a range sensor and a screen, wherein the second mobile terminal further includes: a second processing module, configured to, when receiving a handshake signal sent from the first mobile terminal in a standby state, activate the range sensor to cyclically detect the distance fitting between the first mobile terminal and the range sensor, identify whether the distance is within an allowable range, if not, return to the standby state, and if so, send a handshake feedback signal; and a second Tx/Rx module, configured to, when an interactive connection is established with the first mobile terminal, according to the interaction requirement selected by the first triggering module of the first mobile terminal, activate the light sensor to detect the blackness and whiteness flashing pattern on the screen of the first mobile terminal and convert the pattern into recognizable binary signals which forms data to be transmitted by the first mobile terminal, or send data in the manner of the blackness and whiteness flashing pattern on the screen..

Specifically, the allowable range may be, for example, 2 cm.

As mentioned above, the mobile terminal and the communication method therefor of the present disclosure shows the following benefits:
Firstly, manually activating or deactivating some functions (e.g., manually turning on Bluetooth, manually setting up hotspot, etc.) is not required, and the data transmission (e.g., pictures) can be automatically performed by clicking to share and completed by fitting two mobile terminals face-to-face with one oriented top-down with respect to the other, which does not interrupt other applications such as Bluetooth earphones and WIFI Internet access, and is convenient for use.

Secondly, since the data communication is only performed when the mobile terminals fit each other face-to-face with one oriented top-down with respect to the other in accordance with the present disclosure, so it is immune from information leaking and security issues caused by transmission errors, which satisfies the requirements for material and design costs of the mobile terminals such as mobiles.

Thirdly, there are no limitations for the models of the light sensors and range sensors that are used on the CPU platform of the mobile terminal, the mobiles equipped with the light sensor and range sensors can realize the above-described function of the present disclosure. Currently more than 95% of the smartphones of the market, running with either Android or iOS system, may use the present disclosure for data transmissions, which can be applied in a wide range.

### BRIEF DESCRIPTION OF THE DRAWINGS

Fig. 1 is a flowchart showing operations in a mobile terminal communication method of the present disclosure.
Figs. 2A and 2B are illustrations showing a smartphone using a specific embodiment of the mobile terminal communication method of the present disclosure, wherein Fig. 2A is a front view, and Fig. 2B is a side section view.
Fig. 3 is an illustration showing two mobile phones using the mobile terminal communication method of the present disclosure in a state of fitting each other.
Fig. 4 is a diagram showing a waveform of converted signals from the detection of a screen by a light sensor using the mobile terminal communication method of the present disclosure.
Fig. 5A is a schematic block diagram of a first mobile terminal using the mobile terminal communication method of the present disclosure.
Fig. 5B is a schematic block diagram of a second mobile terminal using the mobile terminal communication method of the present disclosure.

### Description of Reference Numerals of Elements

- 1: Smartphone
- 100: First mobile terminal
- 101, 201: Range sensors
- 102, 202: Light sensor
- 103, 203: Screen
- 104: Triggering module
- 105: First processing module
- 106: First Tx/Rx module
- 11, 11a, 11b: Screens
- 12, 12a, 12b: Light sensors and range sensors
- 200: Second mobile terminal
- 204: First processing module
- 205: First Tx/Rx module
- A, B: Mobile phones
- S100-S182, S200-S250: Step S

### DETAILED DESCRIPTION

The present disclosure will be described below by means of specific embodiments. Other advantages and effects of the disclosure will be readily understood by those skilled in the art from the disclosure herein. The present disclosure may also be implemented or utilized as other different specific embodiments, and various modifications or changes may be made to the details disclosed herein from different views and for different applications without departing from the spirit of the disclosure. It is noted that in case of no conflict the following embodiments and the features in the embodiments may be combined with one another.

It is noted that the drawings presented in the following embodiments are merely to illustrate the basic concept of the present disclosure in a schematic manner and hence only show the components related hereto which are not drawn to their quantities, shapes and sizes in actual implementations where their configurations, quantities and scales may vary arbitrarily and their arrangements may also be more complex.

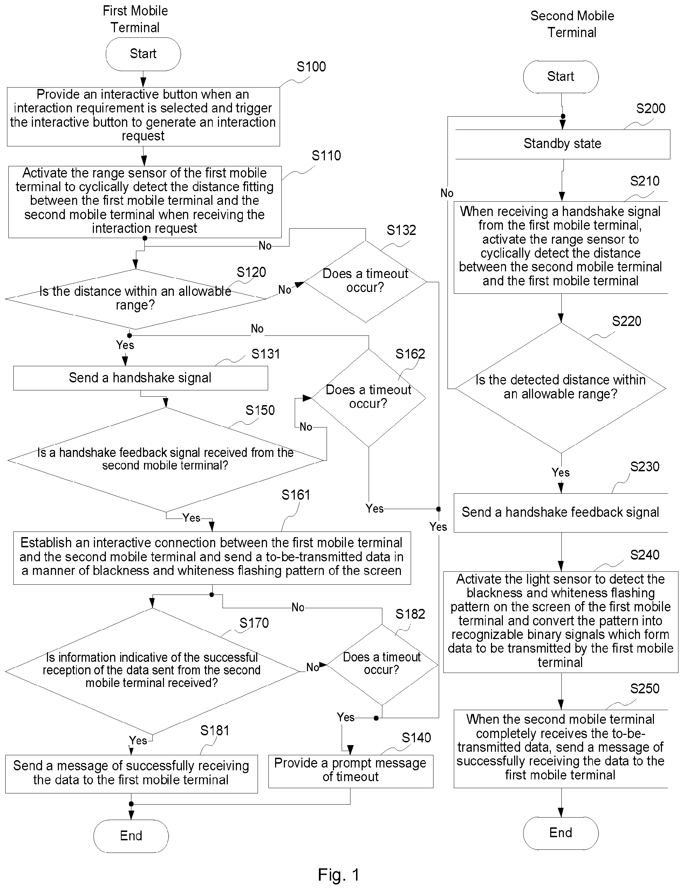

Referring to Fig. 1, the present disclosure provides a mobile terminal communication method used in a first mobile terminal and a second mobile terminal equipped with light sensors, range sensors and screens. Wherein, the first mobile terminal may be, for example, a smartphone, but is not limited thereto. The mobile terminal communication method will be described in detail below.

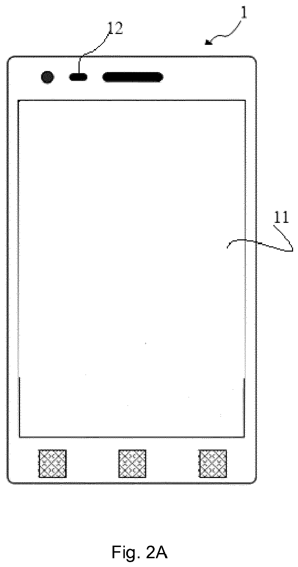

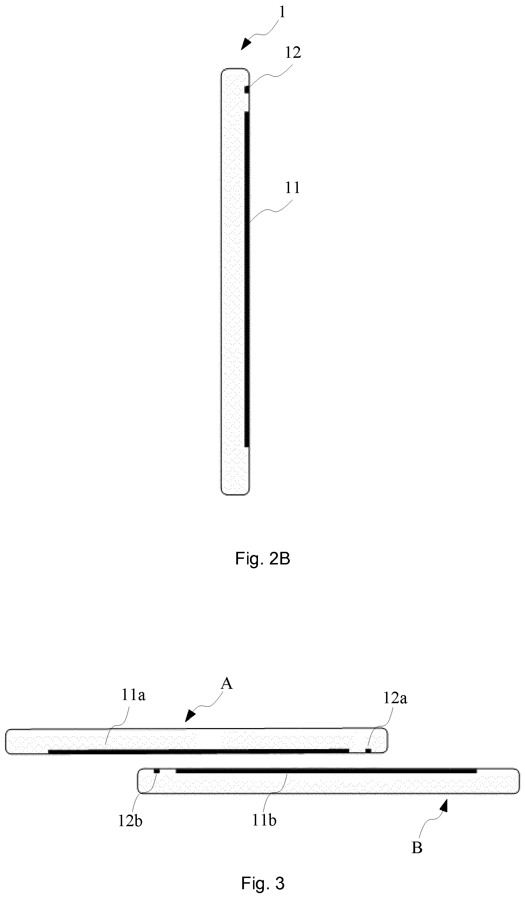

When performing mobile terminal communication operations of the present disclosure, first of all, the light sensor and range sensor of the first mobile terminal are fitted to the screen of the second mobile terminal, and the light sensor and the range sensor of the second mobile terminal are fitted to the screen of the first mobile terminal. In order to facilitate description of this step, this embodiment is described with the smartphone shown in Figs. 2A and 2B, and the mobile phone A serving as the first mobile terminal and the mobile phone B serving as the second mobile terminal shown in Fig. 3 as an example. At present, most smartphones employ a layout as shown in Figs. 2A and 2B. As shown in the figures, the smartphone 1 includes a screen 11 which is located at a central portion and takes up most of the area, as well as a light sensor and a range sensor 12 arranged above the screen 11. While the light and range sensors are two distinct sensors, since their mechanisms are similar (to respectively receive visible light and infrared light), and considering the design and manufacturing convenience, they are arranged at the same location. Therefore, in the schematic drawings and the description of this embodiment, they are considered as a whole part, i.e., being collectively indicated at reference numeral 12. Therefore, the light sensor and range sensor 12a of the mobile phone A serving as the first mobile terminal is fitted to the screen 11 b of the mobile phone B serving as the second mobile terminal, while the light sensor and range sensor 12b of the mobile phone B is fitted to the screen 11 a of the mobile phone A. As long as, as shown in Fig. 3, the mobile phone A and the mobile phone B are fitted to each other face to face with one oriented top-down with respect to the other, it can be ensured that the screen 11 a of the mobile phone A entirely covers the light sensor and range sensor 12b of the mobile phone B and the screen 11 b of the mobile phone B also entirely covers the light sensor and range sensor 12a of the mobile phone A. Such a special approach can not only guarantee the subjective intention of data transmission but also prevents interference from external light during the transmission. Meanwhile, the area of the screen is rather large compared to that of the light sensor and range sensor, the action of fitting each other with one oriented top-down with respect to the other is easy and will not cause inconvenience or confusion during practical applications.

Next, as shown in Fig. 1, on the first mobile terminal side, firstly, step S100 is performed to provide an interactive button when an interaction requirement is selected. The interactive button is triggered to generate an interaction request. In this embodiment, the interaction request is sending a to-be-transmitted data, i.e., a request for unidirectional data transmission. The interactive button may be, for example, a sending button or a sharing button. After that, step S110 is performed.

In step S110, after receiving the interaction request, the range sensor of the first mobile terminal is activated to cyclically detect the distance between the first mobile terminal and the second mobile terminal. Subsequently, step S120 is performed.

In step S120, it is determined whether the detected distance is within an allowable range. If so, the process proceeds to step S131, and if not, the process proceeds to step S132. In this embodiment, the allowable range is 2 cm.

In step S131, a handshake signal is sent. Afterward, step S120 is performed.

In step S132, it is determined whether a timeout occurs. If not, the process returns to step S120 to perform the distance determination step. If so, the process proceeds to step S140.

In step S140, a prompt message indicating the timeout and the communication process is terminated.

In step S150, it is determined whether a handshake feedback signal sent from the second mobile terminal is received. If so, the process proceeds to step S161, and if not, the process proceeds to step S162.

In step S161, an interactive connection between the first mobile terminal and the second mobile terminal is established and the to-be-transmitted data are sent in a manner of blackness and whiteness flashing pattern of the screen. More specifically, the blackness and whiteness flashing pattern on the screen is performed by the high speed flashing of a screen backlight of the screen, and the frequency of the backlight is primarily limited by an internal controlling circuit. This internal controlling circuit may achieve a frequency of 200 KHz to 400 KHz easily. That is, the data transmission capacity of the screen can easily reach 200 Kb to 400 Kb. Thereafter, step S170 is performed.

In step S162, it is determined whether a timeout occurs. If not, the process returns to step S131 to again send a handshake signal. If so, the process proceeds to step S140.

In step S170, it is determined whether a message of successfully receiving the transmitted data is received from the second mobile terminal. If so, the process proceeds to step S181. If not, the process proceeds to step S182.

In step S181, a prompt message of successfully sending/receiving is provided. The prompt message may be provided in the form of sound or vibration.

In step S182, it is determined whether a timeout occurs. If not, the process returns to step S170 to perform the determination step. If so, the process proceeds to step S140.

On the second mobile terminal side, first, step S200 is performed so that it is in a standby state. Next, step S210 is performed.

In step S210, when receiving a handshake signal sent from the first mobile terminal, the range sensor of the second mobile terminal is activated to cyclically detect the distance between the second mobile terminal and the first mobile terminal. Subsequently, step S220 is performed.

In step S220, it is determined whether the detected distance is within an allowable range. If so, the process proceeds to step S230, and if not, it returns to the standby state. In this way, it prevents the second mobile terminal used as a receiver from the interference of the external flashing light source. The second mobile terminal first detects whether the first mobile terminal approaches by the range sensor. If not, it will not respond to the interfering light source to avoid false response to the external light source interfering in an extreme scenario.

In step S230, a handshake feedback signal is sent. After that, step S240 is performed.

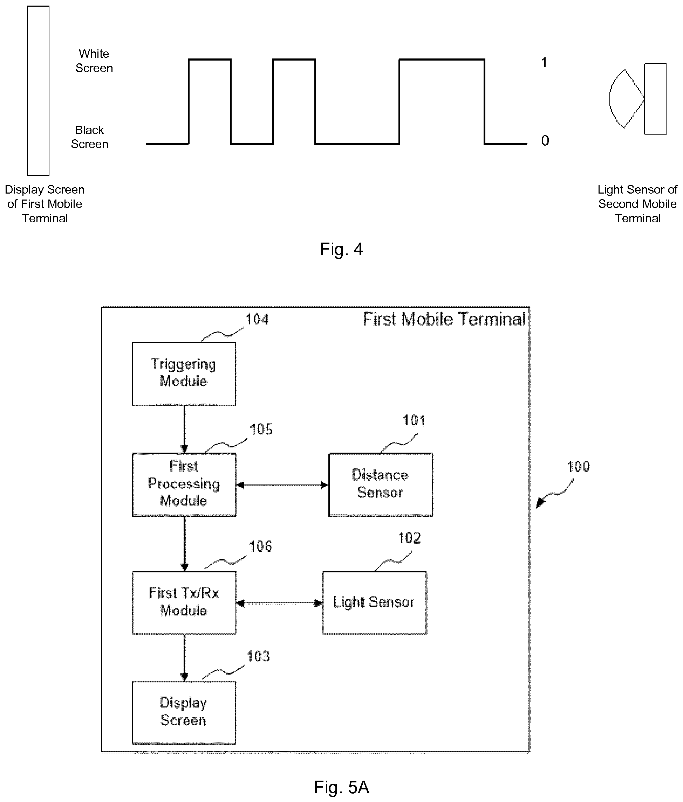

In step S240, the light sensor is activated to detect the blackness and whiteness flashing pattern of the first mobile terminal and convert the pattern into recognizable binary signals which form data to be transmitted by the first mobile terminal. More specifically, as shown in Fig. 4, the detection and conversion process of the light sensor involves: when the screen is in black, the binary signal received by the light sensor is 0, and when the screen is in white, the binary signal received by the light sensor is 1. Step S250 is then performed.

In step S250, after the second mobile terminal completely receives the to-be-transmitted data, it sends a message indicating successfully receiving the data.

It is noted here that, while it has been described in the above embodiment that to-be-transmitted data are sent upon an interaction requirement and that the first mobile terminal sends an interaction request and actively establishes an interactive connection with the second mobile terminal for data transmission as an example, the present disclosure is not limited thereto. In other embodiments, the second mobile terminal may actively establish the connection and initiate the operations.

In addition, the interaction requirement is not limited to the unidirectional data transmission, i.e., sending the to-be-transmitted data and may also be bidirectional data transmissions such as, for example, contacts synchronization, BT/WIFI pairing, encryption key/authority transfer, etc. In this case, after an interactive connection is established between the first mobile terminal and the second mobile terminal, instead of simple unidirectional sending of data by the first mobile terminal to the second mobile terminal, bidirectional data transmission occurs between the first and second mobile terminals. Specifically, the first mobile terminal and the second mobile terminal respectively send a to-be-transmitted data of their own in a manner of blackness and whiteness flashing pattern of their screens. Meanwhile, the light sensor of the first mobile terminal is activated to detect the blackness and whiteness flashing pattern of the screen of the second mobile terminal and convert them into recognizable binary signals which form data to be transmitted by the second mobile terminal. At the same time, the light sensor of the second mobile terminal is also activated to detect the blackness and whiteness flashing pattern of the screen of the first mobile terminal and convert them into recognizable binary signals which form data to be transmitted by the second mobile terminal. With WIFI pairing as an example, when the interaction requirement is WIFI pairing, after an interactive connection is established between the first mobile terminal and the second mobile terminal using the mobile terminal communication method of the present disclosure, the first mobile terminal and the second mobile terminal can be connected by WIFI through pairing of their light sensors and, after the WIFI pairing, can conduct data transmission at a high rate in order to accommodate big data sharing.

Reference is now made to Fig. 5A showing a first mobile terminal using the mobile terminal communication method as defined above. As shown in the figure, the first mobile terminal 100 includes at least a range sensor 101, a light sensor 102, a screen 103, a triggering module 104, a first processing module 105 and a first Tx/Rx module 106.

Wherein, the triggering module 104 is configured to provide an interactive button after an interaction requirement is selected and trigger the interaction button to generate an interaction request. Wherein, the interaction requirement is sending a to-be-transmitted data or bidirectional data transmission.

The first processing module 105 is configured to, after receiving the interaction requirement generated by the triggering module 104, activate the range sensor 101 to cyclically detect the distance between the first mobile terminal and the second mobile terminal 200 and to determine whether the distance is within the aforementioned allowable range. If so, it cyclically sends a handshake signal and waits for a handshake feedback from the second mobile terminal 200. When receiving the handshake feedback signal from the second mobile terminal, it establishes an interactive connection with the second mobile terminal 200. In this embodiment, the allowable range is 2 cm.

The first Tx/Rx module 106 is configured to, after the interactive connection is established with the second mobile terminal 200, according to the selected interaction requirement, send the data in a manner of blackness and whiteness flashing pattern of the screen 103, or to activate the light sensor 102 to detect the blackness and whiteness flashing pattern of a screen 203 of the second mobile terminal 200 and convert them into recognizable binary signals which form data sent by the second mobile terminal.

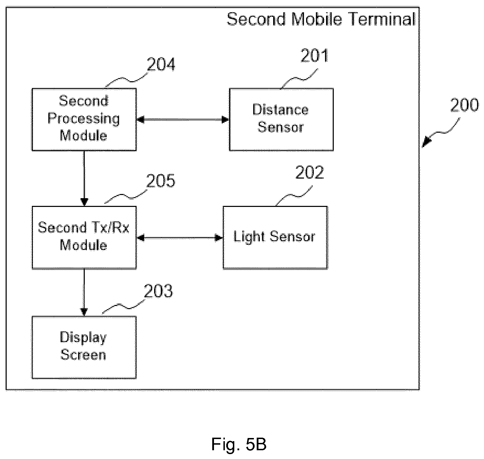

Reference is now made to Fig. 5B showing the second mobile terminal using the mobile terminal communication method as defined above. As shown in the figure, the second mobile terminal 200 includes at least a range sensor 201, a light sensor 202, the screen 203, a second processing module 204 and a second Tx/Rx module 205.

Wherein, the second processing module 204 is configured to, after receiving a handshake signal sent from the first mobile terminal 100 when in a standby state, activate the range sensor 201 to cyclically detect the distance between the second mobile terminal and the first mobile terminal 100 and determine whether the distance is within the allowable range. If not, it returns to the standby state. If so, it sends a handshake feedback signal. In this embodiment, the allowable range is 2 cm.

The second Tx/Rx module 205 is configured to, after an interactive connection is established with the first mobile terminal 100, according to an interaction requirement selected by the triggering module 104 of the first mobile terminal 100, activate the light sensor 202 to detect the blackness and whiteness flashing pattern the screen 103 of the first mobile terminal 100 and convert them into recognizable binary data which form the data transmitted from the first mobile terminal 100, or to send data in a manner of blackness and whiteness flashing pattern of the screen 203.

In summary, the present disclosure provides mobile terminals and a communication method therefor mainly based on: screens inherently in the mobile terminals as signal transmission sources - the blackness and whiteness flashing pattern of the screens correspond to binary 0's and 1's, respectively; light sensors in the mobile terminal as signal reception sources - detecting the blackness and whiteness flashing pattern of the screen of the other mobile terminal and converting them into internally recognizable binary data of "0" and "1"; range sensors in the mobile terminals used as means for determining whether the two mobile terminals fit each other. This ensures automatic data reception/transmission while preventing misjudgments caused by various types of external flashing light, thereby effectively realizing convenient and quick point-to-point communication. Therefore, the present disclosure has effectively overcome the various defects of the prior art and has a high value in industrial use.

The embodiments presented above merely explain the principles and effects of the present disclosure exemplarily and are not intended to limit the disclosure. Any person familiar with the art can make modifications or changes to the above embodiments without departing from the spirit and scope of the disclosure. Accordingly, all equivalent modifications or changes made by those of ordinary skill in the art without departing from the spirit and technical concept disclosed herein are intended to be embraced by the claims of the present disclosure.

## Claims

1. A mobile terminal communication method, comprising the steps:
1) fitting a light sensor and a range sensor of a first mobile terminal to a screen of a second mobile terminal, and fitting a light sensor and a range sensor of the second mobile terminal to a screen of the first mobile terminal;
2) providing, by the first mobile terminal, an interactive button when an interaction requirement is selected, and triggering the interactive button to generate an interaction request;
3) activating, by the first mobile terminal, the range sensor of the first mobile terminal to cyclically detect the fitting distance between the first mobile terminal and the second mobile terminal when receiving the interaction request, and identifying whether the distance is within an allowable range; if yes, proceeding to the next step; or if not, terminating the communication process if a timeout occurs;
4) cyclically sending a handshake signal by the first mobile terminal;
5) activating, by the second mobile terminal, the range sensor of the second mobile terminal to cyclically detect the distance between the second mobile terminal and the first mobile terminal when receiving the handshake signal, and identifying whether the distance is within the allowable range; if yes, proceeding to the next step; or if not, returning to a standby state;
6) sending a handshake feedback signal by the second mobile terminal; and
7) when the first mobile terminal receives the handshake feedback signal, establishing an interactive connection between the first mobile terminal and the second mobile terminal.

2. The mobile terminal communication method according to claim 1, wherein the interaction requirement is sending a to-be-transmitted data.

3. The mobile terminal communication method according to claim 2, wherein step 7) further comprises:
7-1) sending, by the first mobile terminal, a to-be-transmitted data in a manner of blackness and whiteness flashing pattern of the screen, when the interactive connection is established between the first mobile terminal and the second mobile terminal;
7-2) activating the light sensor of the second mobile terminal to detect the blackness and whiteness flashing pattern on the screen of the first mobile terminal, and converting the pattern into recognizable binary signals which form data to be transmitted by the first mobile terminal; and
7-3) when the second mobile terminal completely receives the to-be-transmitted data, sending a message of successfully receiving the data to the first mobile terminal, and when the first mobile terminal receives the message of successfully receiving the data, providing a prompt message of successfully sending/receiving.

4. The mobile terminal communication method according to claim 1, wherein the interaction requirement is bidirectional data transmission.

5. The mobile terminal communication method according to claim 4, wherein step 7) further comprises:
7-1)' respectively sending, by the first mobile terminal and the second mobile terminal, to-be-transmitted data in a manner of blackness and whiteness flashing pattern of the screen, when the interactive connection is established between the first mobile terminal and the second mobile terminal; and
7-2)' activating the light sensor of the first mobile terminal to detect the blackness and whiteness flashing pattern on the screen of the second mobile terminal, and converting the pattern into recognizable binary signals which forms data to be transmitted by the second mobile terminal, and meanwhile activating the light sensor of the second mobile terminal to detect the blackness and whiteness flashing pattern on the screen of the first mobile terminal, and converting the pattern into recognizable binary signals which forms data to be transmitted by the first mobile terminal.

6. The mobile terminal communication method according to claim 4, wherein the bidirectional data transmission is one of contacts synchronization, BT/WIFI pairing, and encryption key/authority transfer.

7. The mobile terminal communication method according to claim 3 or 5, wherein the process of detecting the blackness and whiteness flashing pattern on the screen by the light sensor further comprises: when the screen is in black, the binary signal received by the light sensor is 0, and when the screen is in white, the binary signal received by the light sensor is 1.

8. The mobile terminal communication method according to claim 3, 5 or 7, wherein the blackness and whiteness flashing pattern on the screen is performed by the high speed flashing of the backlight on the screen.

9. The mobile terminal communication method according to claim 1, wherein the allowable range is 2 cm.

10. The mobile terminal communication method according to claim 1, wherein step 3) further comprises: if the distance is not within the allowable range, further determining whether a timeout occurs; if not, performing the step of determining whether the distance is within the allowable range; or, if yes, providing a prompt message of timeout and terminating the communication process.

11. A first mobile terminal, comprising a light sensor, a range sensor and a screen, wherein the first mobile terminal further comprises:
a triggering module, configured to provide an interactive button when an interaction requirement is selected and trigger the interaction button to generate an interaction request;
a first processing module, configured to, when receiving the interaction request generated by the triggering module, activate the range sensor to cyclically detect the distance fitting between the second mobile terminal and the range sensor, identify whether the distance is within the allowable range; if yes, cyclically send a handshake signal and wait for a handshake feedback from the second mobile terminal, and when receiving the handshake feedback signal from the second mobile terminal, establish an interactive connection with the second mobile terminal; and
a first Tx/Rx module, configured to, when the interactive connection is established with the second mobile terminal, according to the selected interaction requirement, send data in the manner of blackness and whiteness flashing pattern of the screen, or activate the light sensor to detect the blackness and whiteness flashing pattern on the screen of the second mobile terminal and convert the pattern into recognizable binary signals which forms data to be transmitted by the second mobile terminal.

12. The first mobile terminal according to claim 11, wherein the allowable range is 2 cm.

13. The first mobile terminal according to claim 11, wherein the interaction requirement is sending a to-be-transmitted data or bidirectional data transmission.

14. A second mobile terminal, comprising a light sensor, a range sensor and a screen, wherein the second mobile terminal further comprises:
a second processing module, configured to, when receiving a handshake signal sent from the first mobile terminal in a standby state, activate the range sensor to cyclically detect the distance fitting between the first mobile terminal and the range sensor, identify whether the distance is within an allowable range; if not, return to the standby state; or if yes, send a handshake feedback signal; and
a second Tx/Rx module, configured to, when an interactive connection is established with the first mobile terminal, according to the interaction requirement selected by the first triggering module of the first mobile terminal, activate the light sensor to detect the blackness and whiteness flashing pattern on the screen of the first mobile terminal and convert the pattern into recognizable binary signals which forms data to be transmitted by the first mobile terminal, or send data in the manner of the blackness and whiteness flashing pattern on the screen.

15. The second mobile terminal according to claim 14, wherein the allowable range is 2 cm.
